# EUROPEAN PATENT SPECIFICATION

(11) **EP 0 864 061 B1**
(45) Date of publication and mention of the grant of the patent: **10.03.1999**
(21) Application number: 96939920.3
(22) Date of filing: 25.11.1996
(51) Int. Cl.: F16L 19/08, F16L 19/12

(54) **A CONNECTOR FOR HIGH-PRESSURE METAL PIPES**
VERBINDUNG FÜR HOCHDRUCKLEITUNGEN AUS METALL
RACCORD DE TUYAUX METALLIQUES HAUTE PRESSION

(30) Priority: 30.11.1995 IT TO950247 U
(43) Date of publication of application: 16.09.1998
(73) Proprietor: Minerdo, Fabrizio, 10043 Orbassano (IT); Ronco, Sergio, 10153 Torino (IT)
(72) Inventor: Minerdo, Fabrizio, 10043 Orbassano (IT); Ronco, Sergio, 10153 Torino (IT)
(74) Representative: Marchitelli, Mauro
(86) International application number: EP9605196
(87) International publication number: WO9720163

(56) References cited:
- EP-B- 0 445 349
- BE-A- 470 104
- DE-A- 4 229 502
- US-A- 2 437 632
- US-A- 2 529 552
- US-A- 2 960 353
- US-A- 3 248 135
- US-A- 3 275 350

## Description

The present invention relates to a connector for high-pressure metal pipes, particularly stainless- or carbon-steel pipes, of the type comprising:
- a tubular body having an external thread coaxial with a cavity for housing an end portion of a pipe,
- a metal cutting ring having a sealing portion which is driven into the cavity of the tubular body in use, the sealing portion having at least one annular cutting edge which, in use, cuts the outer surface of the pipe, and
- a clamping element having an internal thread which engages the external thread of the tubular body in use, exerting on the metal cutting ring an axial thrust which drives the sealing portion into the cavity.

Connectors of the type specified above are produced in accordance with DIN standard 2353. These connectors enable piping which can be disassembled to be produced quickly, avoiding weldings, screw-cuttings and widenings, achieving maximum simplification of the production of the system. The screwing-up of the clamping element wedges the cutting ring between a tapered surface of the body of the connector and the outer surface of the pipe forming an incision in the outer surface of the pipe.

Clamping rings having two cutting edges, in accordance with DIN standard 3861, are generally used. Rings of this type form a first incision which can be inspected visually in the region of the outer cutting edge, and ensure hermetic and leaktight sealing of the pipe ring. The inner cutting edge forms a second incision which cannot be inspected visually but which helps to distribute the forces equally over the entire ring, to prevent vibrations from reaching the first incision, and to stop the clamping of the pipe at a predetermined value.

The reliability and sealing of connectors of this type are ensured only if the assembly instructions provided by the manufacturer are followed carefully. In particular, the pipe to be connected to the connector must be cut at right angles without the use of roller pipe cutters. Internal and external trimmings of the pipe must be carried out to ensure that the pipe is in abutment with a shoulder inside the body of the connector throughout the clamping stage. Before assembly, the conical portion of the connector body, the thread of the body, the cutting ring and the clamping nut have to be lubricated with suitable products (mineral oils for carbon-steel connectors, or nickel anti-seizing compounds for stainless-steel connectors).

At this point, the pipe is inserted in the cavity of the connector body until it bears against the stop abutment of the connector and the nut is tightened with hand force until it can be felt that the cutting ring is bearing well on the clamping nut. The nut then has to be screwed up with a spanner until the cutting edge of the ring comes into contact with the pipe and prevents its rotation. The clamping nut must then be screwed up by three quarters of a turn with the pipe held against its stop and prevented from rotating. The cutting edge of the ring thus cuts the external portion of the pipe to the required depth and forms a raised portion in front of the cutting edge. The nut then has to be unscrewed to check that there is a well-raised portion all around the pipe. The raised portion must cover 70% of the face of the cutting ring. The pre-assembled pipe can then be fitted on a machine and the nut closed with a spanner until a certain resistance is felt and, from this moment, screwed for a further quarter of a turn with one spanner in opposition to another spanner.

Experience has shown that assemblers frequently do not follow the assembly procedure with due care, which involves the risk that leakages of fluid or loosenings of the connector due to vibrations may occur in operation.

The document US-A-2,437,632 describes a connector having the characteristics contained in the preamble to Claim 1. This connector has a toroidal sealing ring which is compressed axially between the cutting ring and the body of the connector in use. In the deformed condition, the seal engages a smooth internal surface of the clamping element.

A problem with the connector described in the document US-A-2,437,632 is that the clamping element may loosen if subjected to vibrational stresses in combination with high pressure for long periods of time.

The document US-A-2,529,552 describes a different solution which has the object of providing a connector which can withstand the effect of vibrations and high pressure for a prolonged period of time without yielding.

According to US-A-2,529,552, a seal of elastomeric material surrounds the entire cutting ring or a substantial portion thereof including the sealing portion bearing the cutting edge.

The solution described in US-A-2,529,552 has the disadvantage of requiring the use of a pre-assembly body other than the final connector body. Moreover, during assembly, a portion of the sealing ring is driven into the cavity of the connector body and the seal is stressed torsionally during the tightening of the nut. This stressing of the seal may cause it to yield, particularly if the connector is disassembled and reassembled several times.

The object of the present invention is to provide improvements to high-pressure, sealing connectors which overcome the problems of the known solutions, preventing leakages of fluid or loosenings of the clamping nut under the effect of vibrations of the system, even if the assembly procedure is not carried out with the necessary care.

According to the present invention, this object is achieved by a connector having the characteristics forming the subject of Claim 1.

According to the invention, the clamping nut of the connector is prevented from unscrewing by means of the deformation of the sealing element, which is preferably constituted by a flat seal which is pressed between two facing frontal surfaces of the connector body and of the cutting ring. This deformation brings about an increase in the diameter of the seal until it engages the threads of the clamping nut which are free from engagement with the thread of the connector body. This locks the clamping nut and in fact prevents it from becoming unscrewed even in the presence of prolonged vibrations.

The connector can be assembled and disassembled without problems since, at the assembly stage, the flat seal is not yet deformed and has an outside diameter which does not interfere with the internal thread of the clamping nut. At the disassembly stage, as soon as the nut is released by the spanner, the diameter of the seal reduces, leaving the nut free to be unscrewed even by hand without hindrance.

As well as solving the problem of the nut becoming unscrewed, the invention also solves the problems of ensuring hermetic sealing of the connector.

The connector according to the invention also has considerable practicality by virtue of the fact that it does not alter currently-used assembly procedures in any way. Another advantage of the invention is that it enables the clamping of the mouth of the metal pipe to be checked in accordance with the normal standards. The components of the connector according to the invention are interchangeable with all known products currently available on the market. The solution according to the invention also has the advantage of cheapness since the basic structure is the same as the previously known connector so that no substantial modifications of production tooling are required.

The characteristics and advantages of the present invention will become clear in the course of the following detailed description given purely by way of non-limiting example, with reference to the appended drawings, in which:
Figure 1 is a partially-sectioned, exploded side elevational view of a connector according to the present invention,
Figure 2 is a partially-sectioned view of the connector of Figure 1 in the assembled configuration,
Figure 3 is a schematic section showing the connector according to the invention, on an enlarged scale, in a pre-assembly configuration, and
Figure 4 is a section similar to that of Figure 3 showing the connector according to the invention in the assembled configuration.

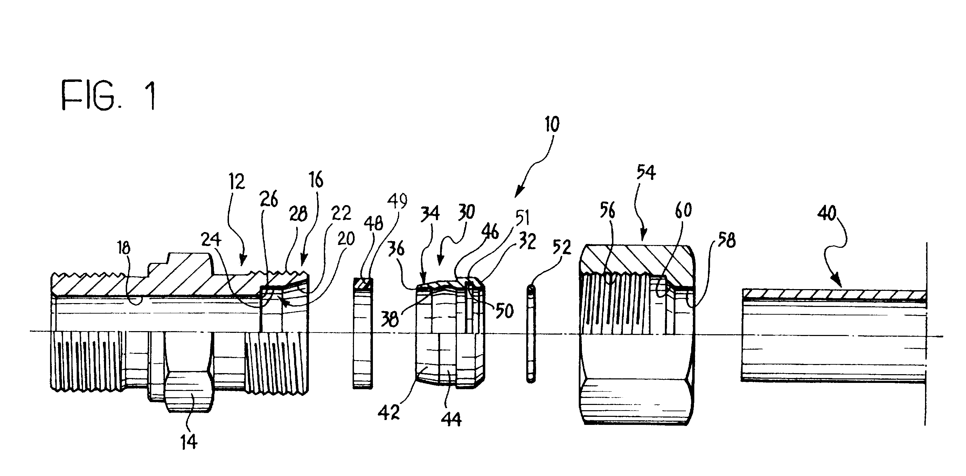

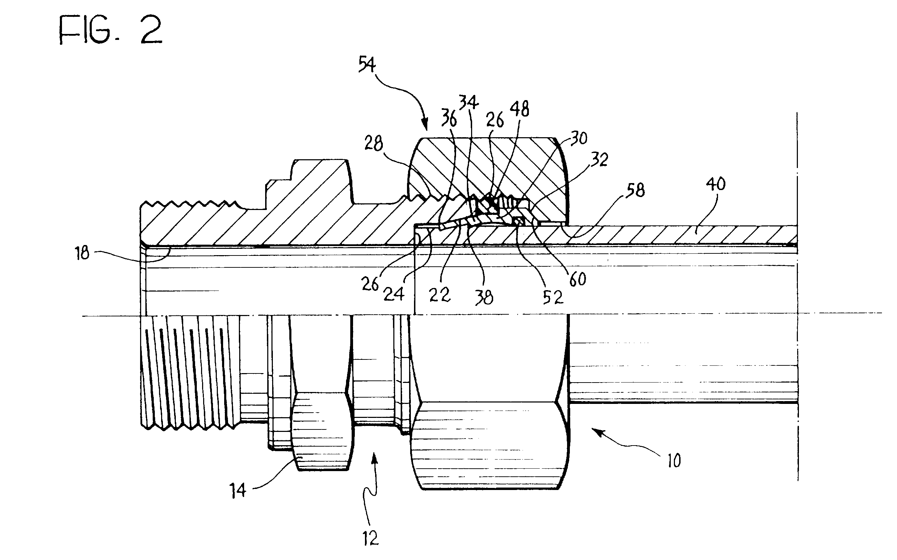

With reference initially to Figures 1 and 2, a connector, indicated 10, for high-pressure oleodynamic systems is intended, in particular, for connecting stainless-steel and carbon-steel pipes. The connector 10 comprises a tubular body 12 having a hexagonal portion 14 and an attachment portion 16. The tubular body 12 has a through-hole 18 which, in the attachment portion 16, opens into a cavity 20 constituted by a conical mouth 22 and by a cylindrical portion 24 terminating in a shoulder 26. The outer surface of the attachment portion 16 has a thread 28.

The connector 10 comprises a metal cutting ring 30 having an inclined thrust portion 32 at a first end. The second end of the cutting ring 30 is constituted by a deformable sealing portion 34 having two annular cutting edges 36, 38 which cut the outer surface of a pipe 40 in use. The sealing portion 34 has a conical outer surface 42 which cooperates with the conical surface 22 of the tubular body 12. The cutting ring 30 has a cylindrical outer surface 44 terminating against a shoulder 46, onto which a flat seal 48 made of elastomeric material, that is, a seal having a rectangular generator section, is fitted. The flat seal 48 has an outer surface 49 which, in the undeformed conditions, is substantially flush with a cylindrical surface of the head 51 of the cutting ring 30. The internal surface of the cutting ring 30 has an annular seat 50 in which a sealing ring 52 of elastomeric material (an O-ring) is fitted.

A clamping nut 54 has a threaded hole 56 which engages the thread 28 of the connector body 12. The clamping nut 54 has a second hole 58 of smaller diameter, through which the end portion of the pipe 40 extends. At the inner edge of the hole 58, the nut 54 has an inclined surface 60 which cooperates with the inclined thrust surface 32 of the cutting ring 30.

The assembly sequence of the connector according to the invention is identical to that for connectors of the prior art described in the introduction to the description.

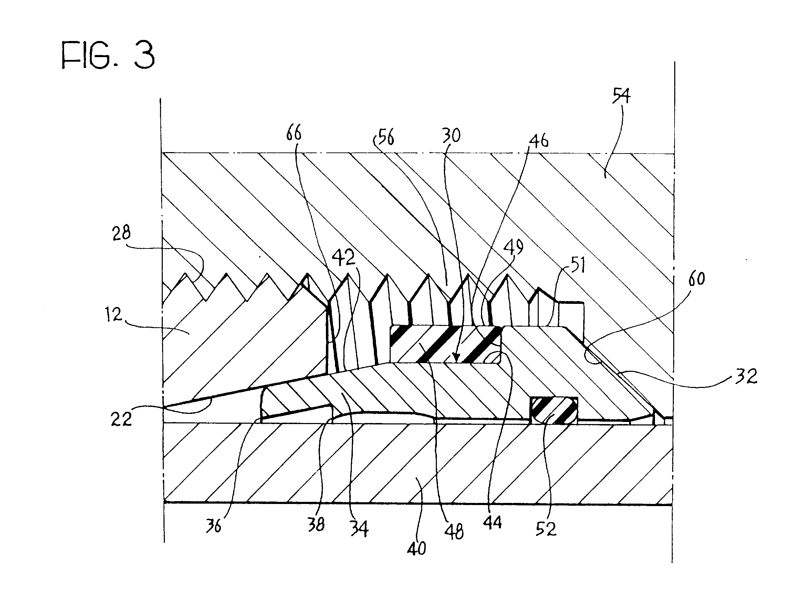

With reference to Figure 3, it will be noted that, before assembly, the flat seal 48 has an outside diameter smaller than the diameter of the thread 56 of the clamping nut 54 so as to allow the cutting ring 30 to be inserted freely in the clamping nut 54. The O-ring 52 establishes a sealing contact with the outer surface of the pipe 40. The sealing portion 34 of the cutting ring 30 is driven into the conical surface 22 of the connector body 12. When the nut 54 is tightened, an axial thrust is exerted on the cutting ring 30 by virtue of the contact between the inclined surfaces 60 and 32.

The sealing portion 34 is deformed progressively as the cutting ring 30 is gradually urged into the conical cavity 22. The cutting edges 36 and 38 thus cut the outer surface of the pipe 40 forming a fluid-tight anchorage.

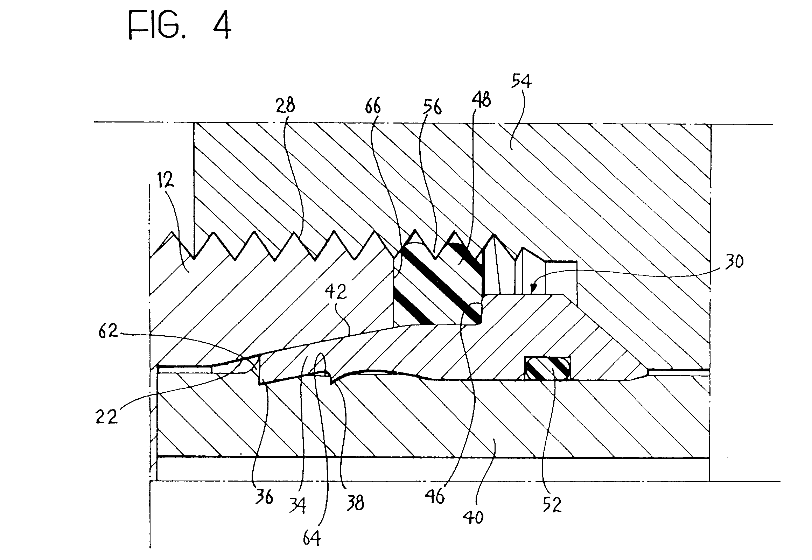

Figure 4 shows the connector fully assembled. It can be seen that the cutting edges 36 and 38 produce respective raised portions of material 62 and 64 and are driven firmly into the surface of the pipe 40.

During the tightening of the nut 54, the flat seal 48 is compressed between the shoulder 46 and the front surface 66 of the connector body 12. This compression causes radial expansion of the seal 48. In the deformed condition, the outer surface 49 of the seal 48 engages with sealing contact in some threads 56 which remain free of engagement with the external thread 28 of the connector body 12.

In the deformed configuration shown in Figure 4, it can be seen that the seal 48 has an axial width greater than the pitch of the thread 56 so as to engage at least two adjacent threads. The solid seal 48 thus forms a sealing region between the clamping nut 54 and the cutting ring 30. The sealing ring 52 defines a second sealing region between the cutting ring 30 and the outer surface of the pipe 40. These two sealing regions can prevent leakages of fluid or oozing if, for example, because of an assembly procedure not carried out in accordance with the instructions, a leakage occurs through the principal sealing region formed on the contact surfaces between the sealing portion 34, the outer surface of the pipe 40 and the conical surface 22. The flat seal 48 which engages the thread 56 of the clamping nut 54 also performs the function of a device for preventing unscrewing, preventing the clamping nut 54 from loosening under the effect of vibrations.

## Claims

1. A connector for high pressure metal pipes, comprising:
- a tubular body (12) having an external thread (28) coaxial with a cavity (22, 24) for housing an end portion of a pipe (40), the cavity having a portion with a conical surface (22),
- a metal cutting ring (30) comprising a head portion (51) and a sealing portion (34) having at least one annular cutting edge (36, 38) and a conical outer surface (42),
- a clamping element (54) having an internal thread (56) adapted to engage the external thread of the tubular body (12), and
- a sealing element (48) of elastomeric material having an outer surface (49),
wherein, in an assembled configuration of the connector, said cutting edge (26, 38) cuts the outer surface of the pipe, said conical outer surface (42) of the cutting ring (30) is kept in direct contact with said conical surface (22) of the tubular body (12) by an axial thrust provided by the engagement of the clamping element (54) with the external thread (28) of the tubular body (12) and said sealing element (48) is compressed axially between the head portion (51) of the cutting ring (30) and the tubular body and establishes a sealing contact with the clamping element (54),
**characterised in that** in an undeformed condition the sealing element (48) has an axial extension such that in a deformed condition corresponding to the assembled configuration of the connector said outer surface (49) of the sealing element (30) engages with sealing contact a portion of the internal thread (56) of the clamping element (54).

2. A connector according to Claim 1, characterized in that the sealing element comprises a flat seal (48) having a substantially cylindrical outer surface (49) which, in the undeformed conditions, is spaced radially from the internal thread (56) of the clamping element (54).

3. A connector according to Claim 2, characterized in that, in use, the sealing element (48) is compressed axially between two facing frontal surfaces (46, 66) of the cutting ring (30) and of the tubular body (12) and in that, as a result of this axial compression, the sealing element (48) expands radially until it engages the internal thread (56) of the clamping element (54).

4. A connector according to Claim 2, characterized in that the sealing element (48) has an axial length equal to or greater than the pitch of the internal thread (56) of the clamping element (54).

5. A connector according to Claim 2, characterized in that the sealing element (48) is fitted onto a cylindrical surface (44) of the cutting ring (30) and is held on the cutting ring (30) without any restraint which prevents the axial compression and radial expansion of the sealing element (48).

6. A connector according to Claim 1, characterized in that it comprises a second sealing element of elastomeric material interposed between the cutting ring (30) and the outer surface of the pipe (40).

7. A connector according to Claim 6, characterized in that the second sealing element is an O-ring (52) housed in an annular seat (50) formed in the internal surface of the cutting ring (30).

## Patentansprüche

1. Verbindung für Hochdruckleitungen aus Metall, umfassend:
- einen rohrförmigen Körper (12) mit einem zu einem Hohlraum (22, 24) koaxialen Außengewinde (28) zur Unterbringung eines Endabschnitts einer Rohrleitung (40), wobei der Hohlraum einen Abschnitt mit einer Kegelfläche (22) aufweist,
- einen Gewindering (30) aus Metall mit einem Kopfabschnitt (51) und einem Dichtabschnitt (34) mit zumindest einer ringförmigen Schneidkante (36, 38) und einer konischen Außenfläche (42),
- ein Spannelement (54) mit einem Innengewinde (56), das zum Eingriff mit dem Außengewinde des rohrförmigen Körpers (12) geeignet ist, und
- ein Dichtelement (48) aus elastomerem Material mit einer Außenfläche (49),
wobei in zusammengesetzter Konfiguration der Verbindung die Schneidkante (36, 38) die Außenfläche der Rohrleitung schneidet, die konische Außenfläche (42) des Gewinderings (30) durch einen durch den Eingriff des Spannelementes (54) mit dem Außengewinde (28) gelieferten Axialdruck in direktem Kontakt mit der Kegelfläche (22) des rohrförmigen Körpers (12) gehalten ist und das Dichtelement (48) zwischen dem Kopfabschnitt (51) des Gewinderings (30) und dem rohrförmigen Körper axial zusammengedrückt wird und einen Dichtkontakt mit dem Spannelement (54) herstellt,
dadurch gekennzeichnet, daß
das Dichtelement (48) in nicht verformtem Zustand eine derartige axiale Ausdehnung hat, daß die Außenfläche (49) des Dichtelementes (30) in verformtem Zustand entsprechend der zusammengesetzten Konfiguration der Verbindung mit einem Abschnitt des Innengewindes (56) des Spannelementes (54) in Dichtkontakteingriff geht.

2. Verbindung nach Anspruch 1, dadurch gekennzeichnet, daß das Dichtelement eine Flachdichtung (48) mit einer im wesentlichen zylindrischen Außenfläche (49) aufweist, die in nicht verformtem Zustand vom Innengewinde (56) des Spannelementes (54) radial beabstandet ist.

3. Verbindung nach Anspruch 2, dadurch gekennzeichnet, daß das Dichtelement (48) im Gebrauch zwischen zwei einander zugewandten Stirnflächen (46, 66) des Gewinderings (30) und des rohrförmigen Körpers (12) axial zusammengedrückt wird, und daß sich das Dichtelement (48) als Folge dieser Axialkompression radial ausbreitet, bis es in das Innengewinde (56) des Spannelementes (54) eingreift.

4. Verbindung nach Anspruch 2, dadurch gekennzeichnet, daß das Dichtelement (48) eine axiale Länge aufweist, die gleich oder größer als die Ganghöhe des Innengewindes (56) des Spannelementes (54) ist.

5. Verbindung nach Anspruch 2, dadurch gekennzeichnet, daß das Dichtelement (48) auf eine zylindrische Fläche (44) des Gewinderings (30) aufgesetzt und ohne jeglichen Rückhalt auf dem Gewindering (30) gehalten ist, was die axiale Kompression und radiale Ausdehnung des Dichtelementes (48) verhindert.

6. Verbindung nach Anspruch 1, dadurch gekennzeichnet, daß sie ein zweites Dichtelement aus elastomerem Material umfaßt, das zwischen dem Gewindering (30) und der Außenfläche der Rohrleitung (40) angeordnet ist.

7. Verbindung nach Anspruch 6, dadurch gekennzeichnet, daß das zweite Dichtelement ein O-Ring (52) ist, der in einem in der Innenfläche des Gewinderings (30) ausgebildeten Ringsitz (50) untergebracht ist.

## Revendications

1. Raccord pour tuyaux métalliques à haute pression, comprenant :
- un corps tubulaire (12) comportant un filetage externe (28) coaxial avec une cavité (22, 24) destinée à loger une partie d'extrémité d'un tuyau (40), la cavité comportant une partie dotée d'une surface conique (22),
- un anneau coupant le métal (30) comprenant une partie formant tête (51) et une partie d'étanchéité (34) comportant au moins un bord tranchant annulaire (36, 38) et une surface externe conique (42),
- un élément de serrage (54) comportant un filetage interne (56) apte à entrer en prise avec le filetage externe du corps tubulaire (12), et
- un élément d'étanchéité (48) en matière élastomère comportant une surface externe (49),
dans lequel, dans une configuration assemblée du raccord, ledit bord tranchant (36, 38) coupe la surface externe du tuyau, ladite surface externe conique (42) de l'anneau coupant (30) est maintenue en contact direct avec ladite surface conique (22) du corps tubulaire (12) par une poussée axiale produite par la prise de l'élément de serrage (54) avec le filetage externe (28) du corps tubulaire (12), et ledit élément d'étanchéité (48) est comprimé axialement entre la partie formant tête (51) de l'anneau coupant (30) et le corps tubulaire et établit un contact d'étanchéité avec l'élément de serrage (54),
caractérisé en ce que, dans une condition non déformée, l'élément d'étanchéité (48) a une étendue axiale de sorte que, dans la condition déformée correspondant à la configuration assemblée du raccord, ladite surface externe (49) de l'élément d'étanchéité (30) coopère, avec un contact d'étanchéité, avec une partie du filetage interne (56) de l'élément de serrage (54).

2. Raccord selon la revendication 1, caractérisé en ce que l'élément d'étanchéité comprend un joint d'étanchéité plat (48) comportant une surface externe sensiblement cylindrique (49) qui, dans les conditions non déformées, est espacée radialement du filetage interne (56) de l'élément de serrage (54).

3. Raccord selon la revendication 2, caractérisé en ce que, en fonctionnement, l'élément d'étanchéité (48) est comprimé axialement entre deux surfaces frontales se faisant face (46, 66) de l'anneau coupant (30) et du corps tubulaire (12), et en ce que, suite à cette compression axiale, l'élément d'étanchéité (48) s'élargit radialement jusqu'à ce qu'il coopère avec le filetage interne (56) de l'élément de serrage (54).

4. Raccord selon la revendication 2, caractérisé en ce que l'élément d'étanchéité (48) a une longueur axiale égale ou supérieure au pas du filetage interne (56) de l'élément de serrage (54).

5. Raccord selon la revendication 2, caractérisé en ce que l'élément d'étanchéité (48) est emboîté sur une surface cylindrique (44) de l'anneau coupant (30) et est maintenu sur l'anneau coupant (30) sans aucune contrainte qui pourrait empêcher la compression axiale et l'élargissement radial de l'élément d'étanchéité (48).

6. Raccord selon la revendication 1, caractérisé en ce qu'il comprend un second élément d'étanchéité en matière élastomère intercalé entre l'anneau coupant (30) et la surface externe du tuyau (40).

7. Raccord selon la revendication 6, caractérisé en ce que le second élément d'étanchéité est un joint d'étanchéité torique (52) logé dans un logement annulaire (50) formé dans la surface interne de l'anneau coupant (30).
